(19)

Europäisches
Patentamt
European
Patent Office
Office européen
des brevets

(11) **EP 3 489 302 A1**

(12) **EUROPEAN PATENT APPLICATION**

(43) Date of publication:
**29.05.2019 Bulletin 2019/22**

(21) Application number: **17203026.4**

(22) Date of filing: **22.11.2017**

(51) Int Cl.:
**C08L 61/06** (2006.01)     **C08K 5/17** (2006.01)
**C08G 8/10** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Prefere Resins Holding GmbH
15537 Erkner (DE)**

(72) Inventors:
• **Richter, Isabella
  15537 Erkner (DE)**
• **Dr. Fliedner, Elke
  15537 Erkner (DE)**

(74) Representative: **Louis Pöhlau Lohrentz
Patentanwälte
Postfach 30 55
90014 Nürnberg (DE)**

(54) **SOLID PHENOLIC ALDEHYDE RESIN COMPOSITION WITH REDUCED ALDEHYDE RELEASE, SOLID CURING COMPOSITION AND METHOD FOR CURING A PHENOLIC ALDEHYDE RESIN AND ARTICLE OBTAINED THEREFROM**

(57)     The present invention is directed to a solid resin composition, a method for producing the solid resin composition, a solid curing composition for curing a phenolic aldehyde resin, a method for curing a phenolic aldehyde resin and an article obtained therefrom.

EP 3 489 302 A1

**Description**

The present invention is directed to a solid resin composition, a method for producing the solid resin composition, a solid curing composition for curing a phenolic aldehyde resin, a method for curing a phenolic aldehyde resin and an article obtained therefrom.

Phenolic aldehyde condensation polymers are an important class of thermosetting polymers widely used as binder or adhesives due to their excellent performance, like mechanical or electrical properties, their chemical resistance or their excellent FST (fire, smoke, toxicity) properties. They are therefore versatile synthetic materials used in a variety of commercial applications like construction, insulations or in technical applications. Among others typically industrial products were phenol aldehyde resins are used are technical, advanced or decorative laminates made out of paper, fiberglass, carbon or cotton, abrasives, friction materials, foundry, mineral or stone fibers, refractories, textile felts or foams.

The resin preferably fully polymerizes during the process of forming the final product and/or adjusting the final shape of the product.

Phenolic aldehyde resins comprise a large family of oligomers and polymers. Phenolic aldehyde are obtained by reacting various phenols and other suitable aromatic alcohols with aldehydes, preferably formaldehyde.

There are two different types of main methods for obtaining phenol aldehyde resins which result in two different classes of resins having different chemical properties.

Resoles are phenol aldehyde resins prepared under alkaline conditions, preferably with a molar ratio of aldehyde to phenol of greater than 1. As a result of these reaction conditions resoles contain reactive hydroxymethyl groups. Due to their presence resoles do harden without the addition of a crosslinking agent and have a limited shelf-life.

Another type of phenol aldehyde resins are novolac resins, which are prepared under acidic conditions, preferably with a molar ratio of aldehyde to phenol of below 1. The resulting novolac resin has preferably thermoplastic properties and is unable to react further without the addition of a crosslinking agent. This type of resin is preferably essentially free of remaining aldehyde such as formaldehyde.

Of all aldehydes, formaldehyde is produced on the largest scale as chemical raw material for production of many other materials and chemical compounds next to aldehyde based resins such as phenol aldehyde resins.

Formaldehyde is a naturally occurring organic compound with the formula $CH_2O$, also known by its systematic name methanal. It is ubiquitous in living organisms and is built as an intermediate during combustion of carbon compounds. Therefore, formaldehyde is part of the residential environment.

In Europe new regulations came into force in 2015. According to the "EU Harmonized Classification, Labelling and Packaging (CLP) Regulation" formaldehyde is classified as carcinogen category 1B and mutagen category 2. This stronger classification became into force in 2016.

As consequence products with an amount of >0.1 wt.-% free formaldehyde, based on the total weight of product, have to be labeled accordingly as category carcinogen 1B. - In consequence of that a reviewing process for defining of Occupational Exposure Limits as well as harmonized emission thresholds limits has started.
In any case the reclassification revived ongoing efforts to reduce formaldehyde as emissions gas generated in processing of the resin and/or to limit unreacted formaldehyde in resins.

Depending on the type of phenol aldehyde resin, a reduction of formaldehyde release is achieved by different approaches.

Since resoles are preferably prepared from an excess of formaldehyde, reduction of formaldehyde emission is achieved by optimization of the formulation, for example by reducing the amount of free formaldehyde in the resole or by addition of formaldehyde scavengers as, for example, described in EP 2621973 A1, WO 2012/025699 A1, WO 2013/160449 A1 or WO 2008/005635 A2.

Novolac resins itself are free of formaldehyde. The main source of formaldehyde during curing of a novolac resin is the hardening component, when a formaldehyde donating agent, for example hexamethylenetetramine (urotropin) or others, is used.

During the curing process hardening components such as hexamethylenetetramine generate formaldehyde, which can react with polymer molecules of the novolac resin thereby contributing to the curing of the resin. The generated formaldehyde can, however, also evaporate from the resin under curing conditions.

One approach for reducing formaldehyde emission targets the consumption of formaldehyde during the curing process.

For example, US 5,696,201 A describes inter alia heat curing of a novolac resin by introducing a high-energy compressed gas, preferably saturated steam, into a mold cavity comprising the novolac resin. The compressed gas produces an internal pressure of several bar, which is maintained until the heat-curing novolac resin has completely polymerized. Thereby, most of the gaseous and toxic cleavage products produced, such as formaldehyde, can participate in the crosslinking during the entire curing time.

Another approach for reducing formaldehyde emission provides for alternative hardening components as replacement of hexamethylenetetramine.

For example, US 7,763,316 B2 describes a formulation and method for eliminating the use of hexamethylenetetramine (hexa) in shell sand encapsulation, wherein a standard novolac resin is used with the hexa component replaced by solid granular resole.

The process described in US 7,763,316 A1 necessitates strict control of the process temperature, which should be in the range of from 138°C (280°F) to 193°C (380°F). Furthermore, quenching the mixture of a novolac resin and a resole by cooling the mixture to a critical temperature of between 110°C (230°F) to 142°C (285°F) is important before substantial crosslinking of the novolac resin occurs.

However, the product obtained in US 7,763,316 A1 still generated phenol and formaldehyde when final curing of the resin was achieved.

It is an object of the present invention to provide a solid resin composition comprising a phenolic aldehyde resin obtained from reacting at least one phenolic compound with at least one aldehyde under acidic conditions, which is provided in a ready-to-use mixture and, upon curing, release substantially no, preferably no, aldehyde, preferably formaldehyde, without negatively impacting curing properties as well as the physical and chemical properties of the cured resin.

The problem of the present invention is solved by the provision of a solid resin composition according to claim 1, which comprises at least one phenolic aldehyde resin obtainable by reacting at least one phenolic compound and at least one aldehyde under acidic conditions, and at least one amino group containing compound comprising at least one of a primary amine group and/or a secondary amine group.

Preferred embodiments of the solid resin composition according to the present invention are described in any one of dependent claims 2 to 9.

The problem of the present invention is further solved by the provision of a method according to claim 10 for producing a solid resin composition according to any one of claims 1 to 9, the method comprises the step of:

a) obtaining at least one phenolic aldehyde resin by reacting at least one phenolic compound and at least one aldehyde compound under acidic conditions, and

b) adding at least one amino group containing compound comprising at least one of a primary amine group and/or a secondary amine group to the at least one phenolic aldehyde resin obtained in step a).

The problem of the present invention is further solved by the provision of a solid curing composition according to claim 11 for curing a phenolic aldehyde resin, which comprises at least one aldehyde and/or aldehyde releasing agent, and at least one amino group containing compound comprising at least one of a primary amine group and/or a secondary amine group.

Preferred embodiments of the curing composition according to claim 10 are described in any one of dependent claims 12 to 14.

The problem of the present invention is further solved by the provision of a method of claim 15 for curing a phenolic aldehyde resin, the method comprises the step of:

a) providing at least one phenolic aldehyde resin, said resin being obtained from reacting at least one phenolic compound and at least one aldehyde under acidic conditions, and

b) applying heat to the at least one phenolic aldehyde resin obtained in step a), preferably at a temperature at or above the softening point of the at least one phenolic aldehyde resin, further preferably at a temperature of 50°C or more,

wherein between step a) and step b) and/or in step b) and/or after step b) said at least one phenolic aldehyde resin is contacted with at least one aldehyde and/or aldehyde releasing agent in the presence of at least one amino group containing compound comprising at least one of a primary amine group and/or a secondary amine group.

Preferred embodiments of the method according to claim 15 are described in any one of dependent claims 16 to 17.

The object of the present invention is further solved by the provision of a use according to claim 18 of at least one amino group containing compound comprising at least one of a primary amine group and/or a secondary amine group in a method of curing a phenolic aldehyde resin with at least one aldehyde and/or aldehyde releasing agent, preferably formaldehyde releasing agent, wherein the phenolic aldehyde resin is obtained from reacting at least one phenolic compound and at least one aldehyde under acidic conditions.

The object of the present invention is further solved by the provision of an article according to claim 19 comprising a thermosetting phenol formaldehyde plastic material obtained from curing a solid phenolic aldehyde resin, said resin being obtained from reacting at least one phenolic compound and at least one aldehyde under acidic conditions, with at least one aldehyde and/or aldehyde releasing agent, preferably formaldehyde and/or formaldehyde releasing agent, selected from the group consisting of 1,3,5-trioxane, paraformaldehyde, hexamethylenetetramine, amino resins, solid resoles, bisoxazolines, benzoxazines, oxazolidines, epoxides, other solid aldehydes like glyceraldehyde, and mixtures thereof, preferably amino resins, 1,3,5-trioxane, paraformaldehyde, hexamethylenetetramine, and mixtures thereof, further preferably 1,3,5-trioxane, paraformaldehyde, hexamethylenetetramine, and mixtures thereof, further preferably hexamethylenetetramine, in the presence of at least one amino group containing compound comprising at least one of a primary amine group and/or a secondary amine group.

The present invention provides for a at standard conditions (temperature: 25 °C, pressure: 1013 mbar) solid resin composition, comprising inter alia at least one phenolic aldehyde resin obtainable by reacting, preferably condensing, at least one phenolic compound and at least one aldehyde under acidic conditions.

Reacting, preferably condensing, at least one phenolic compound and at least one aldehyde under acidic conditions produces phenolic aldehyde resins which are known to the skilled person as novolac resins.

The term "solid" used according to the present invention refers to the state of matter at standard conditions (temperature: 25 °C, pressure: 1013 mbar).

Accordingly, a solid composition as well as a solid component of the composition, such as a solid aldehyde and/or aldehyde releasing agent or solid amino group containing compound, each are in the solid state at standard conditions (temperature: 25 °C, pressure: 1013 mbar).

A solid composition as well as a solid component of the composition each independently can be an amorphous solid or a crystalline solid. A solid composition as well as a solid component of the composition each independently can be porous or nonporous.

The at least one phenolic aldehyde resin comprised in the solid resin composition of the present invention is preferably a thermoplastic polymer that can be melted, but will not crosslink upon the application of heat alone as well as the application of heat and pressure.

In order to cure a preferably thermoplastic, phenolic aldehyde resin contacting the phenolic aldehyde resin with at least one aldehyde and/or aldehyde releasing agent, preferably formaldehyde and/or formaldehyde releasing agent, is necessary and curing of the phenolic aldehyde resin is preferably induced by the application of heat and, optionally, pressure.

The least one aldehyde and/or aldehyde releasing agent can complete the cross-linking reaction to convert a preferably thermoplastic novolac resin to an insoluble and infusible state.

Suitable aldehydes and/or aldehyde releasing agents are preferably at standard conditions (temperature: 25 °C, pressure: 1013 mbar) solid aldehydes and/or aldehyde releasing agents, further preferably at standard conditions solid formaldehyde releasing agents, further preferably selected from the group consisting of 1,3,5-trioxane, paraformaldehyde, hexamethylenetetramine, amino resins, solid resoles, bisoxazolines, benzoxazines, oxazolidines, epoxides, other solid aldehydes like glyceraldehyde, and mixtures thereof, preferably amino resins, 1,3,5-trioxane, paraformaldehyde, hexamethylenetetramine, and mixtures thereof, further preferably 1,3,5-trioxane, paraformaldehyde, hexamethylenetetramine, and mixtures thereof, further preferably hexamethylenetetramine.

The at least one aldehyde and/or aldehyde releasing agent, preferably formaldehyde and/or formaldehyde releasing agent, acts as a hardener by providing aldehyde groups which can react, preferably condensate, with a phenolic group of the resin.

For example, during the crosslinking reaction of hexamethylenetetramine, paraformaldehyde or 1,3,5-trioxane with at least one phenolic aldehyde resin formaldehyde is generated, which can form methylene linkages between polymers of the phenolic aldehyde resin.

During heat curing in the presence of at least one aldehyde and/or aldehyde releasing agent, preferably formaldehyde and/or formaldehyde releasing agent, an infusible polymer network is obtained, a thermoset polymer.

Thermoset polymers preferably have a rigid, three-dimensional structure and high molecular weight. Furthermore, thermoset polymers normally decompose before melting.

During heat curing of a phenolic aldehyde resin in the presence of at least one aldehyde and/or aldehyde releasing agent, preferably formaldehyde and/or formaldehyde releasing agent, a significant amount of aldehyde, preferably formaldehyde, is generated, which can also evaporate from the resin.

The inventors of the present invention found that when at least one phenolic aldehyde resin known to the skilled person as novolac resin is thermoset with at least one aldehyde and/or aldehyde releasing agent, preferably formaldehyde and/or formaldehyde releasing agent, in the presence of at least one amino group containing compound comprising at least one of a primary amine group and/or a secondary amine group it is possible to significantly reduce the amount of aldehyde, preferably formaldehyde, evaporated from the, preferably molten, resin composition, further preferably without negatively impacting the curing reaction during the curing process.

Furthermore, the chemical and/or physical properties of the cured resin are also not deteriorated by the presence of at least one amino group containing compound during curing.

Furthermore, when the at least one amino group containing compound is an at standard conditions (temperature: 25 °C, pressure: 1013 mbar) solid amino group containing compound it allows for an uncomplicated handling and/or transportation of amino group containing compound.

The at least one amino group containing compound comprising at least one of a primary amine group and/or a secondary amine group can be contacted with the at least one, preferably thermoplastic, phenolic aldehyde resin by preferably incorporating the at least one amino group containing compound into a resin composition comprising the at least one, preferably thermoplastic, phenolic aldehyde resin at various stages of the manufacturing process of the resin composition.

The at least one amino group containing compound comprising at least one of a primary amine group and/or a secondary amine group can, however, also be provided to the at least one, preferably thermoplastic, phenolic aldehyde resin before and/or during curing together with at least one aldehyde and/or aldehyde releasing agent, preferably formaldehyde and/or formaldehyde releasing agent, for example, in form of a curing composition of the present invention, or separated from the at least one aldehyde and/or aldehyde releasing agent, preferably formaldehyde and/or formaldehyde releasing agent.

Thereby it is possible to adjust the amount of the at least one amino group containing compound that is necessary to reduce aldehyde, preferably formaldehyde, emissions in a time and cost saving manner.

The at least one amino group containing compound comprises at least one amine group selected from the group consisting of a primary amine group, a secondary amine group and combinations thereof. For example the at least one amino group containing compound comprises 1, 2, 3, or more primary amine group(s) and/or 1, 2, 3, or more secondary amine group(s).

The at least one amino group containing compound comprising at least one of a primary amine group and/or a secondary amine group is preferably selected from the group consisting of aliphatic amines, aromatic amines, peptides, proteins, urea, salts thereof, and mixtures thereof, preferably aliphatic amines, aromatic amines, salts of aliphatic amines, salts of aromatic amines, and mixtures thereof.

Suitable amino containing compounds are preferably selected from the group of organic compounds having the general formula (1), the general formula (2), salts thereof, and mixtures thereof, preferably the general formula (1), salts thereof, and mixtures thereof,:

$$R^1\text{-}NH_2 \qquad (1)$$

$$R^2\text{-}NH\text{-}R^3 \qquad (2)$$

wherein $R^1$, $R^2$ and $R^3$ each independently represents an organic residue selected from the group consisting of aliphatic residues having from 1 to 30 carbon atoms, which can be branched or straight chained, saturated or unsaturated, aromatic residues with 6 to 30 carbon atoms and combinations thereof,

wherein said aliphatic residues independently can be substituted with one or more residues preferably selected from the group consisting of amine groups, hydroxy groups, thiol groups, carboxyl groups, halide groups, hydroxy alkyl groups with 1 to 20 carbon atoms, which can be branched or straight chained, with one or more hydroxyl groups, preferably 1 to 3 hydroxy groups, amino alkyl groups with 1 to 20 carbon atoms, which can be branched or straight chained, with one or more amine groups, preferably 1 to 3 amine groups, alkoxy groups with 1 to 20 carbon atoms, which can be branched or straight chained, and combinations thereof,

wherein said aromatic residues can independently be substituted with one or more residues selected from the group consisting of amine groups, hydroxy groups, thiol groups, carboxyl groups, halide groups, alkyl groups with 1 to 20 carbon atoms, which can be branched or straight chained, amino alkyl groups with 1 to 20 carbon atoms, which can be branched or straight chained, with one or more amine groups, preferably 1 to 3 amine groups, hydroxy alkyl groups with 1 to 20 carbon atoms, which can be branched or straight chained, with one or more hydroxyl groups, preferably 1 to 3 hydroxy groups, alkoxy groups with 1 to 20 carbon atoms, which can be branched or straight chained, and combinations thereof,

wherein $R^2$ and $R^3$ together can form a cycloaliphic residue with 4 to 20 carbon atoms, which can independently be substituted with one or more residues selected from the group consisting of amine groups, hydroxy groups, thiol groups, carboxyl groups, halide groups, alkyl groups with 1 to 20 carbon atoms, which can be branched or straight chained, amino alkyl groups with 1 to 20 carbon atoms, which can be branched or straight chained, with one or more amine groups, preferably 1 to 3 amine groups, hydroxy alkyl groups with 1 to 20 carbon atoms, which can be branched or straight chained, with one or more hydroxyl groups, preferably 1 to 3 hydroxy groups, alkoxy groups with 1 to 20 carbon atoms, which can be branched or straight chained, and combinations thereof.

Preferably, the at least one amino group containing compound is selected from the group consisting of alkyl amines preferably having 1 to 15 carbon atoms, alkanol amines preferably having 1 to 15 carbon atoms, amino carboxylic acids preferably having 2 to 15 carbon atoms, aromatic amines preferably having 5 to 15 carbon atoms, salts thereof, and mixtures thereof.

Preferably, the at least one amino group containing compound comprising at least one of a primary amine group and/or a secondary amine group is solid at standard conditions (temperature: 25 °C, pressure: 1013 mbar).

Further preferably, the at least one amino group containing compound comprising at least one of a primary amine group and/or a secondary amine group is non-volatile during manufacturing of the solid resin composition and/or curing of the solid resin composition at elevated temperatures, preferably at temperatures of above 75°C.

Suitable at standard conditions solid amino group containing compounds comprising at least one of a primary amine group and/or a secondary amine group include amino carboxylic acids, salts of amino carboxylic acids, salts of alkyl amines having from 1 to 30 carbon atoms, which can be branched or straight chained, catecholamines, melamine, tyramine, salts thereof, and mixtures thereof, preferably amino carboxylic acids, salts thereof, and mixtures thereof.

Further preferably, the at least one solid amino containing compound is selected from the group consisting of alanine, beta alanine, arginine, asparagine, aspartic acid, cysteine, glutamic acid, glutamine, glycine, histidine, isoleucine, leucine, lysine, methionine, phenylalanine, proline, serine, threonine, tryptophan, tyrosine, valine, 2-aminoadipic acid, 2-aminobutanoic acid, 3-aminobutanoic acid, 4-aminobutanoic acid, 6-aminohexanoic acid, 3-amino-2-methylpropanoic acid, 2-amino-2-mehtylpropanioic acid, 5-amino-4-oxopentanoic acid, 5-aminopentanoic acid, 2,4-diaminobutanoic acid, dopamine, n-glycidyl glycine, gamma aminobutyric acid, 5-aminolevolinic acid, 4-aminobenzoic acid, carnitine, hydroxyproline, citrulline, salts thereof, and mixtures thereof, further preferably glycine, alanine, serine, beta alanine, salts thereof, and mixtures thereof, further preferably glycine.

Salts of the aforementioned amino group containing compounds are preferably salts of the respective amine with acids, such as hydrohalogenic acid, organic acids, mineral acids or mixtures thereof, preferably hydrochloric acid.

Chiral centers, unless stated otherwise, may be in the R or S configuration. The invention relates both to the optically pure compounds and to stereoisomer mixtures, such as enantiomer mixtures and/or diastereomer mixtures, in any ratio.

It is known to the skilled person that, for example, amino carboxylic acids such as alanine can be provided in form of (S)-alanine, also know as L-alanine (CAS Registry Number: 56-41-7), (R)-alanine, also know as D-alanine (CAS Registry Number: 338-69-2), and/or as racemic mixture of (S)-alanine and (R)-alanine, also known as DL-alanine (CAS Registry Number: 302-72-7).

Preferably, a solid resin composition of the present invention comprises the at least one amino group containing compound comprising at least one of a primary amine group and/or a secondary amine group, preferably at least one primary amine group, in an amount of at least 0.01 wt.-%, preferably in the range of from 0.01 wt.-% to 10 wt.-%, preferably of from 0.1 wt.-% to 9 wt.-%, preferably of from 0.5 wt.-% to 7 wt.-%, further preferably of from 0.7 wt.-% to 6.5 wt.-%, further preferably 1 wt.-% to 5 wt.-%, each based on the total weight of the solid resin composition.

Preferably, a curing composition of the present invention comprises the at least one amino group containing compound comprising at least one of a primary amine group and/or a secondary amine group, preferably at least one primary amine group, in an amount of at least 0.01 wt.-%, preferably in the range of from 0.01 wt.-% to 70 wt.-%, preferably of from 0.1 wt.-% to 50 wt.-%, preferably of from 0.5 wt.-% to 30 wt.-%, further preferably of from 1 wt.-% to 20 wt.-%, each based on the total weight of the curing composition.

According to the present invention at least one amino group containing compound comprising at least one of a primary amine group and/or a secondary amine group is used to significantly reduce the emission of at least one aldehyde, preferably formaldehyde, generated during curing of a, preferably thermoplastic, phenolic aldehyde resin with at least one aldehyde and/or aldehyde releasing agent, preferably formaldehyde releasing agent, wherein said, preferably thermoplastic, phenolic aldehyde resin is obtained from reacting at least one phenolic compound and at least one aldehyde under acidic conditions.

The amino group containing compound can be provided together with a, preferably thermoplastic, phenolic aldehyde resin known to the skilled person as novolac resin, preferably in form of a solid resin composition of the present invention.

The amino group containing compound can also be provided together with at least one aldehyde and/or aldehyde releasing agent, preferably formaldehyde releasing agent, preferably in the form of a curing composition of the present invention.

Furthermore, the amino group containing compound can also be provided together with at least one additive.

The term "thermoplastic resin" refers to a resin, that reversibly becomes pliable or moldable above a specific temperature and solidifies upon cooling, preferably below a certain temperature which can be described by different methods like melting point, dropping point, the glass transition temperature $T_g$ or the like.

Further preferably, the solid resin composition of the present invention is a dry resin composition.

The term "dry" or "dry composition" means, that the resin composition of the present invention has a content of at standard conditions (temperature: 25 °C, pressure: 1013 mbar) liquid components of not more than 10 wt.-%, preferably of not more than 5 wt.-%, further preferably of not more than 1 wt.-%, each based on the total weight of the composition.

Liquid components, which are comprised in the solid resin composition of the present invention, preferably include water, which, for example, is formed during the reaction, preferably condensation, of at least one phenolic compound with at least one aldehyde and/or is absorbed from ambient atmosphere, liquid amine compounds and/or mixtures thereof.

The amount of liquid components in the dry resin composition of the present invention can be determined by methods known to the skilled-person, for example the methods described in ISO 760:1978 ("Determination of water -- Karl Fischer method (General method)", publication date: 1978-12).

Preferably, the solid resin composition of the present invention comprises at least one, preferably thermoplastic, phenolic aldehyde resin having a dropping point in the range of from 50°C to about 150°C.

The dropping point can be determined according to the method described in DIN ISO 2176:1997-05 ("Petroleum products - Lubricating grease - Determination of dropping point (ISO 2176:1995)", publication date: 1997-05).

In a preferred embodiment the at least one phenolic compound is selected from the group consisting of phenol, phenol alkyl ethers, hydroxy phenols, alkoxy phenols, alkyl phenols, phenyl phenols, hydroxy group containing polyphenylmethanes, hydroxynaphthalenes, and mixtures thereof.

The most common precursor to phenolic aldehyde resins is phenol.

Suitable phenol alkyl ethers are preferably ethers of the phenolic OH group with alkyl residues having 1 to 15 carbon atoms, which can be straight chained or branched, and include, for example, anisole (methoxybenzene), phenetole (ethoxybenzene), or mixtures thereof.

Suitable hydroxy phenols are phenols substituted with one or more hydroxyl groups, preferably one hydroxyl group and include, for example, resorcinol (benzene-1,3-diol), catechol (benzene-1,2-diol), hydroquinone (benzene-1,4-diol), or mixtures thereof.

Preferably, suitable hydroxy phenols can be substituted with one or more alkyl groups preferably having 1 to 15 carbon atoms, which independently are either straight chained or branched, and include, for example, alkylresorcinols, alkylcatechols, or mixtures thereof.

Suitable alkoxy phenols are phenols substituted with one or more alkoxy groups preferably having 1 to 15 carbon atoms, which independently are either straight chained or branched, and include, for example, methoxyphenole, ethoxyphenole, or mixtures thereof, preferably 2-methoxyphenole, 3-methoxyphenole, 4-methoxyphenole, 2-ethoxyphenole, 4-ethoxyphenole, or mixtures thereof.

Suitable alkyl phenols are phenols substituted with one or more alkyl groups preferably having 1 to 15 carbon atoms, which independently are either straight chained or branched. Suitable alkyl phenols include, for example, cresols, xylenols, or mixtures thereof, further preferably 2-mehtylphenol, 3-methylphenol, 4-methylphenol, 2,3-dimethylphenol, 2,4-dimethylphenol, 2,5-dimethylphenol, 2,6-dimethylphenol, 3,4-dimethylphenol, 3,5-dimethylphenol, 4-tert-buthylphenol, 4-iso-octylphenol, 4-nonylphenol, or mixtures thereof.

Suitable phenyl phenols are phenols substituted with one or more phenyl groups and include for example 2-phenylphenol, 4-phenylphenol, or mixtures thereof.

Suitable hydroxyl group containing polyphenylmethanes are preferably polyphenylmethanes derivatives substituted with at least one hydroxyl group, preferably 1 to 4 hydroxyl groups, and include, for example, bisphenols, such as bisphenol A, bisphenol AF, bisphenol B, bisphenol BP, bisphenol C, bisphenol C2, bisphenol E, bisphenol F, bisphenol G, bisphenol PH, bisphenol TMC, bisphenol Z, bisphenol M, bisphenol S, bisphenol P, bisphenol FL or mixtures thereof.

Suitable hydroxyl naphtalenes include, for example, 1-hydroxy naphthalene, 2-hydroxy naphthalene, or mixtures thereof.

Further preferably the at least one phenolic compound is selected from the group consisting of phenol, anisole, phenetole, 2-methoxyphenole, 3-methoxyphenole, 4-methoxyphenole, 2-ethoxyphenole, 4-ethoxyphenole, 2-mehtylphenol, 3-methylphenol, 4-methylphenol, 2,3-dimethylphenol, 2,4-dimethylphenol, 2,5-dimethylphenol, 2,6-dimethylphenol, 3,4-dimethylphenol, 3,5-dimethylphenol, 4-tert-buthylphenol, 4-iso-octylphenol, 4-nonylphenol, 2-phenylphenol, 4-phenylphenol, 1-hydroxy naphthalene, bisphenol A, bisphenol AF, bisphenol B, bisphenol BP, bisphenol C, bisphenol C2, bisphenol E, bisphenol F, bisphenol G, bisphenol PH, bisphenol TMC, bisphenol Z, bisphenol M, bisphenol S, bisphenol P, bisphenol FL, 1-hydroxy naphthalene, 2-hydroxy naphthalene, or mixtures thereof.

Aldehydes are organic compounds containing at least one aldehyde group (-CHO).

In a preferred embodiment the at least one aldehyde is selected from the group consisting of aliphatic aldehydes, preferably having 1 to 15 carbon atoms, which independently can be branched or straight chained, aromatic aldehydes, preferably having 7 to 15 carbon atoms, which independently can be branched or straight chained, and mixtures thereof.

Aliphatic aldehydes having 1 to 15 carbon atoms, which can be branched or straight chained, are preferably saturated or unsurated.

For example, aliphatic aldehydes having 1 to 15 carbon atoms can be monoaldehydes such as formaldehyde (methanal), acetaldehyde (ethanal), propionaldehyde (propanal), butyraldehyde (butanal), acrolein (prop-2-enal), crotonaldehyde ((2E)-but-2-enal), or mixtures thereof, dialdehyde such as glyoxal (ethanedial), malondialdehyde (1,3-propanedial), glutaraldehyde (1,5-pentandial) or mixtures thereof.

Aromatic aldehydes having 7 to 15 carbon atoms are, for example, furfural, benzaldehyde, 4-methylbenzaldehyde, hydroxybenzaldehydes such as 2-hydroxybenzaldehyde (salicylaldehyde), 4-hydroxy-3-methoxybenzaldehyde (vanillin), or mixtures thereof.

Further preferably, the at least one aldehyde is selected from the group consisting of formaldehyde, acetaldehyde, propionaldehyde, butyraldehyde, acrolein, crotonaldehyde, glyoxal, malondialdehyde, glyceraldehyde, glutaraldehyde, benzaldehyde, 4-methylbenzaldehyde, 2-hydroxybenzaldehyde, 4-hydroxy-3-methoxybenzaldehyde, and mixtures thereof.

Preferably, the least one, preferably thermoplastic, phenolic aldehyde resin comprised in the solid resin composition of the present invention is obtained by reacting, preferably condensing, an excess of the at least one phenolic compound over the at least one aldehyde under acidic conditions.

Further preferably, the molar ratio of aldehyde compound to phenolic compound is less than 1 mol of aldehyde compound per 1 mol of phenolic compound, preferably in the range of from 0.3 to 0.99 mol of aldehyde compound per 1 mol of phenolic compound, further preferably in the range of from 0.4 to 0.98 mol of aldehyde compound per 1 mol of phenolic compound, further preferably in the range of from 0.50 to 0.95 mol of aldehyde compound per 1 mol of phenolic compound.

Due to the excess of the at least one phenolic compound preferably up to 10 wt.-%, further preferably 4-8 wt.-%, of the total amount of phenolic compounds used for the synthesis of the resin can be recovered from the resin after completion of the reaction, preferably condensation.

For example, residual phenolic compounds can be reduced to an amount of below 1 wt.-%, based on the total weight of the least one, preferably thermoplastic, phenolic aldehyde resin, by methods known in the art, for example by solvent extraction, such as washing with water, and/or by use of distillation.

The term "residual phenolic compound" preferably refers to phenolic compounds such as phenol, which are not bound within the resin and which, thus, can evaporate from the resin. Residual phenolic compounds can also be designated as "free phenolic compounds".

The amount of residual phenolic compounds in a phenolic aldehyde resin can preferably be determined according to the method described in DIN EN ISO 8974:2002-09 ("Plastics - Phenolic resins - Determination of residual phenol content by gas chromatography (ISO 8974:2002)", publication date: 2002-09).

As outlined above, the solid resin compositing preferably further comprises at least one aldehyde and/or aldehyde releasing agent, preferably formaldehyde releasing agent.

The at least one aldehyde and/or aldehyde releasing agent is further preferably at least one at standard conditions (temperature: 25 °C, pressure: 1013 mbar) solid aldehyde and/or aldehyde releasing agent, preferably formaldehyde releasing agent, further preferably selected from the group consisting of 1,3,5-trioxane, paraformaldehyde, hexamethylenetetramine, amino resins, solid resoles, bisoxazolines, benzoxazines, oxazolidines, epoxides, other solid aldehydes like glyceraldehyde, and mixtures thereof, preferably amino resins, 1,3,5-trioxane, paraformaldehyde, hexamethylenetetramine, and mixtures thereof, further preferably 1,3,5-trioxane, paraformaldehyde, hexamethylenetetramine, and mixtures thereof, further preferably hexamethylenetetramine.

Further preferably, the at least one aldehyde releasing agent, preferably formaldehyde releasing agent, is dispersed within the solid resin composition of the present invention.

Preferably, a solid resin composition of the present invention comprises the at least one aldehyde and/or aldehyde releasing agent, preferably formaldehyde releasing agent, in an amount in the range of from 0 wt.-% to 50 wt.-%, preferably of from 0.1 wt.-% to 40 wt.-%, preferably of from 1 wt.-% to 30 wt.-%, further preferably of from 2 wt.-% to 20 wt.-%, further preferably of from 3 wt.-% to 15 wt.-%, each based on the total weight of the solid resin composition.

Preferably, a curing composition of the present invention comprises the at least one aldehyde and/or aldehyde releasing agent, preferably formaldehyde releasing agent, in an amount of at least 0.01 wt.-%, preferably at least 3 wt.-%, preferably in the range of from 4 wt.-% to 99.99 wt.-%, preferably of from 5 wt.-% to 99.8 wt.-%, preferably of from 6 wt.-% to 99 wt.-%, further preferably of from 7 wt.-% to 98 wt.-%, each based on the total weight of the curing composition.

The solid resin compositing of the present invention preferably further comprises at least one additive further preferably selected from the group consisting of pigments, flame retardants, flow additives, processing aids, dust binders, separating agents, fillers, antifungal agents, anti-static agents, and mixtures thereof.

Preferably, the at least one additive is an at standard conditions (temperature: 25 °C, pressure: 1013 mbar) solid or liquid additive or a combination of at least one solid additive and at least one liquid additive.

Preferably, a solid resin composition of the present invention comprises the at least one additive in an amount in the range of from 0 wt.-% to 70 wt.-%, preferably of from 0.1 wt.-% to 65 wt.-%, further preferably of from 1 wt.-% to 60 wt.-%, further preferably of from 2 wt.-% to 55 wt.-%, further preferably of from 3 wt.-% to 50 wt.-%, each based on the total weight of the solid resin composition, preferably with the proviso that the content of at standard conditions (temperature: 25 °C, pressure: 1013 mbar) liquid additives is not more than 10 wt.-%, preferably not more than 5 wt.-%, further preferably not more than 1 wt.-%, each based on the total weight of the composition.

Preferably, a curing composition of the present invention comprises the at least one additive in an amount up to 99.98 wt.-%, preferably up to 96,99 preferably in an amount in the range of from 0 wt.-% to 95.99 wt.-%, preferably of from 0.1 wt.-% to 94.9 wt.-%, preferably of from 0.5 wt.-% to 94 wt.-%, further preferably of from 1 wt.-% to 93 wt.-%, each based on the total weight of the curing composition, preferably with the proviso that the content of at standard conditions (temperature: 25 °C, pressure: 1013 mbar) liquid additives is not more than 10 wt.-%, preferably not more than 5 wt.-%, further preferably not more than 1 wt.-%, each based on the total weight of the composition.

In a preferred embodiment, the solid resin composition of the present invention comprises or consists of

at least one of the aforementioned phenolic aldehyde resin, preferably in an amount of up to 99.99 wt.-%, preferably in an amount in the range of from 29.99 wt.-% to 99.99 wt.-%, preferably of from 34.8 wt.-% to 99.7 wt.-%, preferably of from 38.5 wt.-% to 97.5 wt.-%, further preferably of from 42.3 wt.-% to 95.3 wt.-%, further preferably of from 46 wt.-% to 93 wt.-%, each based on the total weight of the solid resin composition,
at least one of the aforementioned amino group containing compound, preferably in an amount of at least 0.01 wt.-%, preferably in an amount in the range of from 0.01 wt.-% to 10 wt.-%, preferably of from 0.1 wt.-% to 9 wt.-%, preferably of from 0.5 wt.-% to 7 wt.-%, preferably of from 0.7 wt.-% to 6.5 wt.-%, further preferably of from 1 wt.-% to 5 wt.-%, each based on the total weight of the solid resin composition, and,
optionally, at least one of the aforementioned aldehyde releasing agent, preferably formaldehyde releasing agent, preferably in an amount in the range of from 0 wt.-% to 50 wt.-%, preferably of from 0.1 wt.-% to 40 wt.-%, preferably of from 1 wt.-% to 30 wt.-%, further preferably of from 2 wt.-% to 20 wt.-%, further preferably of from 3 wt.-% to 15 wt.-%, each based on the total weight of the solid resin composition, and,
optionally, at least one of the aforementioned additive, preferably in an amount in the range of from 0 wt.-% to 70 wt.-%, preferably of from 0.1 wt.-% to 65 wt.-%, further preferably of from 1 wt.-% to 60 wt.-%, further preferably of from 2 wt.-% to 55 wt.-%, further preferably of from 3 wt.-% to 50 wt.-%, each based on the total weight of the solid resin composition, wherein the sum total of the weight percentages is not exceeding 100 wt.-%.

The solid resin composition of the present invention is preferably a solid, particulate resin composition wherein the individual components of the composition are either present in a single particle or in a mixture of distinct particles.

Further preferably, the resin composition of the present invention is in the form of a free flowing powder, pellets, granules, beads, flakes or a combination thereof.

In a preferred embodiment, the solid, particulate resin composition of the present invention comprises each of the individual components in the same particle, further preferably as a mixture.

Preferably, the solid resin composition of the present invention comprises or consists of individual particles, each comprising or consisting of at least one phenolic aldehyde resin obtainable by reacting at least one of the aforementioned phenolic compound and at least one of the aforementioned aldehyde under acidic conditions, at least one of the aforementioned amino group containing compound comprising at least one of a primary amine group and/or a secondary amine group, and, optionally, at least one of the aforementioned aldehyde and/or aldehyde releasing agent, preferably formaldehyde releasing agent, and, optionally, at least one of the aforementioned additive.

Alternatively, the solid resin composition of the present invention comprises particles comprising at least one phenolic aldehyde resin obtainable by reacting at least one of the aforementioned phenolic compound and at least one of the aforementioned aldehyde under acidic conditions, and particles containing the at least one of the aforementioned amino group containing compound comprising at least one of a primary amine group and/or a secondary amine group.

Optionally, the at least one of the aforementioned aldehyde releasing agent, preferably formaldehyde releasing agent, further preferably selected from the group consisting of amino resins, hexamethylenetetramine, 1,3,5-trioxane, paraformaldehyde, and mixtures thereof, preferably hexamethylenetetramine, 1,3,5-trioxane, paraformaldehyde, and mixtures thereof, further, preferably hexamethylenetetramine, is present in the particulate solid resin composition of the present invention as individual particles.

Further preferably, the at least one of the aforementioned amino group containing compound comprising at least one of a primary amine group and/or a secondary amine group and the at least one of the aforementioned aldehyde releasing agent, preferably formaldehyde releasing agent, further preferably selected from the group consisting of amino resins, hexamethylenetetramine, 1,3,5-trioxane, paraformaldehyde, and mixtures thereof, preferably hexamethylenetetramine, 1,3,5-trioxane, paraformaldehyde, and mixtures thereof, further preferably hexamethylenetetramine, are combined in individual particles, preferably as mixture of both components.

The method for producing a solid resin composition according to the present invention comprises the steps of:

a) obtaining at least one phenolic aldehyde resin by reacting at least one of the aforementioned phenolic compound and at least one of the aforementioned aldehyde compound under acidic conditions, and
b) adding at least one of the aforementioned amino group containing compound comprising at least one of a primary amine group and/or a secondary amine group to the at least one phenolic aldehyde resin obtained in step a).

Further preferably, between step a) and step b) and/or in step b) and/or after step b) at least one aldehyde and/or aldehyde releasing agent, preferably formaldehyde and/or formaldehyde releasing agent, is added to the resin composition of the present invention.

Further preferably, between step a) and step b) and/or in step b) and/or after step b) at least one of the aforementioned additives is added to the resin composition.

Optionally, between step a) and step b) and/or in step b) and/or after step b) residual phenolic compounds and/or water are removed by solvent extraction, such as washing with water, and/or by use of distillation.

Preferably, the method for producing a solid resin composition according to the present invention comprises the steps of:

a1) obtaining a melt of at least one phenolic aldehyde resin by reacting at least one of the aforementioned phenolic compound and at least one of the aforementioned aldehyde compound under acidic conditions, and

a2) cooling the melt of at least one phenolic aldehyde resin obtained in step a1) in order to obtain a solidified, resin,

wherein between step a1) and step a2) and/or in stepa2) and/or after step a2) at least one of the aforementioned amino group containing compound comprising at least one of a primary amine group and/or a secondary amine group is added.

Preferably, in step a2) the melt is cooled to a temperature of below 50°C.

Further preferably, after step a2) at least one aldehyde and/or aldehyde releasing agent, preferably formaldehyde and/or formaldehyde releasing agent, is added to the resin composition of the present invention.

Further preferably, between step a1) and step a2) and/or in step a2) and/or after stepa2) at least one of the aforementioned additives is added to the resin composition.

Optionally, between step a1) and step a2) and/or in step a2) and/or after stepa2) of the method for producing a solid resin composition according to the present invention residual phenolic compounds and/or water are removed by solvent extraction, such as washing with water, and/or by use of distillation.

Further preferably, between step a1) and step a2) and/or in step a2) and/or after step a2) of the method for producing a solid resin composition according to the present invention the resin composition is converted to a particulate form, preferably comminuted, in order to obtain a free flowing powder, pellets, granules, beads, flakes or a combination thereof.

Further preferably, the reaction, preferably condensation, of the at least one phenolic compound and at least one aldehyde is conducted in the presence of at least one acidic catalyst known in the art, which preferably is at least one Brønsted-Lowry acid.

The at least one, preferably thermoplastic, phenolic aldehyde resin comprised in the solid resin composition of the present invention is obtainable by reacting, preferably condensing, at least one phenolic compound and at least one aldehyde under acidic conditions, further preferably at a pH of below 7.0, measured at standard conditions (temperature: 25 °C, pressure: 1013 mbar).

Further preferably, the at least one acidic catalyst include inorganic acids, organic acids, salts of organic acids and/or mixtures thereof.

Suitable inorganic acids, which are also known as mineral acids, are preferably derived from one or more inorganic compounds and include, for example, sulfuric acid ($H_2SO_4$), hydrofluoric acid (HF), hydrochloric acid (HCl), hydrobromic acid (HBr), hydroiodic acid (HI), phosphoric acid ($H_3PO_4$), boric acid ($H_3BO_3$), tetrafluoroboric acid ($HBF_4$), sulfamic acid ($H_3NSO_3$) or mixtures thereof.

Suitable organic acids are organic compounds with acidic properties, preferably having at least one acidic functional group selected from the group consisting of a carboxyl group (-C(=O)OH), a sulfo group (-S(=O)$_2$OH), a phosphono group (-P(=O)(OH)$_2$) and mixtures thereof.

Suitable organic acids are preferably selected from the group of monocarboxylic acids having 1 to 10 carbon atoms, dicarboxylic acids having 2 to 10 carbon atoms, monosulfonic acids having 1 to 10 carbon atoms, and mixtures thereof.

Suitable monocarboxylic acids having 1 to 10 carbon atoms are, for example, formic acid, acetic acid, propionic acid, butyric acid, valeric acid, benzoic acid or mixtures thereof.

Suitable dicarboxylic acids having 2 to 10 carbon atoms are, for example, oxalic acid, malonic acid, succinic acid, glutaric acid, adipic acid, pimelic acid or mixtures thereof.

Suitable monosulfonic acids having 1 to 10 carbon atoms are, for example, benzenesulfonic acid, p-toluenesulfonic acid or mixtures thereof.

For example, when oxalic acid is used as a catalyst a resins with low color can be obtained. Furthermore, oxalic acid also decomposes at temperatures above 180°C to carbon dioxide, carbon monoxide and water, which preferably facilitates the removal of the catalyst from the resin thermally.

Suitable salts of organic acids are preferably metal salts of the aforementioned organic acids comprising, preferably polyvalent, metal cations, which further preferably are cations of metals selected from groups 2 to 12 on the periodic table of elements or mixtures thereof.

Further preferably, said at least one acidic catalyst is selected from the group consisting of formic acid, acetic acid, propionic acid, butyric acid, valeric acid, benzoic acid, oxalic acid, malonic acid, succinic acid, glutaric acid, adipic acid, pimelic acid, benzenesulfonic acid, p-toluenesulfonic acid, salts thereof, and mixtures thereof.

As outlined above the at least one phenolic aldehyde resin comprised in the solid resin composition of the present invention will not crosslink upon the application of heat alone in the absence of at least one aldehyde and/or aldehyde releasing agent, preferably formaldehyde releasing agent.

In order to cure a, preferably thermoplastic, phenolic aldehyde resin contacting the phenolic aldehyde resin with at least one aldehyde and/or aldehyde releasing agent, preferably formaldehyde and/or formaldehyde releasing agent, is necessary and curing of the phenolic aldehyde resin is preferably induced by the application of heat and, optionally, pressure.

The at least one aldehyde and/or aldehyde releasing agent can be provided in the form of a solid curing composition of the present invention, comprising at least one aldehyde and/or aldehyde releasing agent, preferably formaldehyde and/or formaldehyde releasing agent, and at least one of the aforementioned amino group containing compound comprising at least one of a primary amine group and/or a secondary amine group.

Preferably, the curing composition of the present invention comprises at least one aldehyde and/or aldehyde releasing agent, preferably formaldehyde releasing agent, further preferably selected from the group consisting of 1,3,5-trioxane, paraformaldehyde, hexamethylenetetramine, amino resins, solid resoles, bisoxazolines, benzoxazines, oxazolidines, epoxides, other solid aldehydes like glyceraldehyde, and mixtures thereof, preferably amino resins 1,3,5-trioxane, paraformaldehyde, hexamethylenetetramine, and mixtures thereof, further preferably 1,3,5-trioxane, paraformaldehyde, hexamethylenetetramine, and mixtures thereof, further preferably hexamethylenetetramine, and at least one of the aforementioned amino group containing compound comprising at least one of a primary amine group and/or a secondary amine group.

Further preferably, the curing composition of the present invention further comprises at least one of the aforementioned additives.

Further preferably, the curing composition of the present invention comprises

at least one aldehyde and/or aldehyde releasing agent, preferably formaldehyde releasing agent, further preferably selected from the group consisting of 1,3,5-trioxane, paraformaldehyde, hexamethylenetetramine, amino resins, solid resoles, bisoxazolines, benzoxazines, oxazolidines, epoxides, other solid aldehydes like glyceraldehyde, and mixtures thereof, preferably amino resins, 1,3,5-trioxane, paraformaldehyde, hexamethylenetetramine, and mixtures thereof, further preferably 1,3,5-trioxane, paraformaldehyde, hexamethylenetetramine, and mixtures thereof, further preferably hexamethylenetetramine, preferably in an amount of at least 0.01 wt.-%, preferably of at least 3 wt.-%, preferably in the range of from 4 wt.-% to 99.99 wt.-%, preferably of from 5 wt.-% to 99.8 wt.-%, preferably of from 5.5 wt.-% to 99 wt.-%, further preferably of from 6 wt.-% to 98 wt.-%, each based on the total weight of the curing composition, and

at least one of the aforementioned amino group containing compound comprising at least one of a primary amine group and/or a secondary amine group, preferably in an amount of at least 0.01 wt.-%, preferably in the range of from 0.01 wt.-% to 70 wt.-%, preferably of from 0.1 wt.-% to 50 wt.-%, preferably of from 0.5 wt.-% to 30 wt.-%, further preferably of from 1 wt.-% to 20 wt.-%, each based on the total weight of the curing composition, and,

optionally, at least one of the aforementioned additive, preferably in an amount up to 99.98 wt.-%, preferably up to 96.99 wt.-%, preferably in the range of from 0 wt.-% to 95.99 wt.-%, preferably of from 0.1 wt.-% to 94.9 wt.-%, preferably of from 0.5 wt.-% to 94 wt.-%, further preferably of from 1 wt.-% to 93 wt.-%, each based on the total weight of the curing composition, wherein the sum total of the weight percentages is not exceeding 100 wt.-%.

Preferably, the curing composition of the present invention is a particulate curing composition, which preferably is in the form of a free flowing powder, pellets, granules, beads, flakes or a combination thereof.

The method of the present invention for curing a phenolic aldehyde resin comprises the steps of:

a) providing at least one phenolic aldehyde resin, said resin being obtained from reacting at least one phenolic compound and at least one aldehyde under acidic conditions, and
b) applying heat to the at least one phenolic aldehyde resin obtained in step a), preferably at a temperature at or above the softening point of the at least one phenolic aldehyde resin, further preferably at a temperature of 50°C or more, further preferably at a temperature of 70°C or more, further preferably at a temperature in the range of from 80 °C to 300°C, further preferably of from 90°C to 250°C,

wherein between step a) and step b) and/or in step b) and/or after step b) said at least one phenolic aldehyde resin is contacted with at least one aldehyde and/or aldehyde releasing agent in the presence of at least one amino group containing compound comprising at least one of a primary amine group and/or a secondary amine group.

Preferably, the method of the present invention for curing a phenolic aldehyde resin comprises the steps of:

b1) melting at least one phenolic aldehyde resin, said resin being obtained from reacting at least one phenolic compound and at least one aldehyde under acidic conditions, and

b2) contacting the melt obtained in step b1) with at least one of the aforementioned aldehyde and/or aldehyde releasing agent in the presence of at least one of the aforementioned amino group containing compound comprising at least one of a primary amine group and/or a secondary amine group.

Preferably, in step b1) of the method for curing a phenolic aldehyde resin melting of the at least one phenolic aldehyde resin is achieved by applying heat to the at least one phenolic aldehyde resin, preferably at a temperature at or above the melting point of the at least one phenolic aldehyde resin, preferably at a temperature of 50°C or more, further preferably at a temperature of 70°C or more, further preferably at a temperature in the range of from 80°C to 300°C, further preferably of from 90°C to 250°C.

Preferably, the at least one phenolic aldehyde resin is provided in the form of a solid resin composition according to the present invention.

Further preferably, the at least one aldehyde and/or aldehyde releasing agent and the at least one amino group containing compound comprising at least one of a primary amine group and/or a secondary amine group are provided in the form of a solid curing composition according to present invention.

Alternatively, the at least one aldehyde and/or aldehyde releasing agent

Further preferably, after step b) of the method of the present invention for curing a phenolic aldehyde resin the at least one phenolic aldehyde resin is cured and preferably solidifies to form an article comprising a thermosetting phenol formaldehyde plastic material obtained from curing a solid novolac resin composition with at least one at solid formaldehyde releasing agent selected from the group consisting of 1,3,5-trioxane, paraformaldehyde, hexamethylenetetramine, amino resins, and mixtures thereof, preferably 1,3,5-trioxane, paraformaldehyde, hexamethylenetetramine, and mixtures thereof, further preferably hexamethylenetetramine, in the presence of at least one at solid amino group containing compound comprising at least one of a primary amine group and/or a secondary amine group, preferably glycine, alanine, serine, beta alanine, salts thereof, and mixtures thereof further preferably glycine.

The abbreviation "wt.-%" used in the present patent application refers to percentage by weight.

**Example 1: Determination of formaldehyde emissions in phenolic powder resins**

**Preparation and measurement:**

A metal chimney was put into an oven and was connected to the integrated outlet of an 551 Memmert drying oven (Memmert GmbH & Co. KG, Schwabach, DE)

The drying oven was pre-heated to 200°C. 2 washing bottles were filled with distillated water (1. bottle 100g, 2. bottle 60g) and were also connected to the oven pipe on the one and gas sampler at the other side.

0,5g of a dry phenolic powder resin was evenly distributed on a filter paper and set onto a sample holder (90 x100mm metallic grid). Afterwards, the sample holder was inserted into an aspirated chimney in the pre-heated oven.

Emissions of formaldehyde at 200°C were collected for 20 min with an air flow of 0,5l/min.

**Measurement of formaldehyde emissions:**

Both washing bottles were back weighted and united before the measurement. The determination of free formaldehyde was conducted by photometric measurement using a Dr.Lange test kit LCK 325 and a photometer Lasa100 both obtained from Hach Lange GmbH (Dusseldorf, DE).

Based on the definition, that the photometer value, given in mg/l equals mg/g, the Formaldehyde emission in mg/g is calculated according to formula (A) as follows:

$$\text{Formaldehyde Emission} = (w_{FoPhoto} \times m_{WB}) / (m_{PR}) \qquad (A),$$

whereas

- $w_{FoPhoto}$ means the meassured photometer value in mg/l,
- $m_{WB}$ means the mass of the washing bottle in g,
- $m_{PR}$ means the mass of the powder resin in mg,

The following commercially available curable powder resin compositions were obtained from Prefere Resins Germany GmbH (Erkner, DE). The composition of the novolac resin compositions, designated Resin A and Resin B in the following, are summarized below

Resin A: Prefere 90 8033T

| | |
|---|---|
| 60 wt.-% | novolac resin based on phenol formaldehyde |
| 6 wt.-% | hexamethylenetetramine |
| 34 wt.-% | mixture of a flame retardant (ammonium polyphosphate) and processing aids |

Resin B: Prefere 90 8035T

| | |
|---|---|
| 60 wt.-% | novolac resin based on phenol formaldehyde |
| 10 wt.-% | hexamethylenetetramine |
| 30 wt.-% | mixture of a flame retardant (ammonium polyphosphate) and processing aids |

The properties of the novolac resin compositions without addition of glycine are summarized in table 1. Following test compositions were prepared:

Test composition 1:

| | |
|---|---|
| Resin A, | 100 wt.-% |
| Glycine | - |
| Total | 100 wt.-% |

Test composition 2:

| | |
|---|---|
| Resin A | 99 wt.-% |
| Glycine | 1.0 wt.-% |
| Total | 100 wt.-% |

Test composition 3:

| | |
|---|---|
| Resin A | 98 wt.-% |
| Glycine | 2.0 wt.-% |
| Total | 100 wt.-% |

Test composition 4:

| | |
|---|---|
| Resin B, | 100wt.-% |
| Glycine | - |
| Total | 100wt.-% |

Test composition 5:

| | |
|---|---|
| Resin B | 99 wt.-% |
| Glycine | 1.0 wt.-% |
| Total | 100 wt.-% |

Test composition 6:

| Resin B | 98 wt.-% |
|---------|----------|
| Glycine | 2.0 wt.-% |
| Total | 100 wt.-% |

Furthermore, the performance of all six test compositions were tested by measuring the B-Time at 150°C and the flow at 125°C according to methods known in the art.

The B-Time at 150°C was determined according to the method described in DIN EN ISO 8987:2005-12 ("Plastics - Phenolic resins - Determination of reactivity on a B-transformation test plate (ISO 8987:2005)"; Publication date: 2005-12).The flow at 125°C was determined according to the method described in DIN EN ISO 8619:2005-03 ("Plastics - Phenolic resin powder - Determination of flow distance on a heated glass plate (ISO 8619:2003)"; Publication date: 2005-03).

The results of the tests are summarized in Table 1 below:

| Resin | Test composition | Glycine [wt.-%] | B time at 150°C [s] | Flow at 125°C [mm] | Formaldehyde [mg $CH_2O$ / g resin] | Emission Reduction [%] |
|-------|------------------|-----------------|---------------------|--------------------|-------------------------------------|------------------------|
| A | 1 | - | 64 | 17 | 0.42 | - |
| A | 2 | 1 | 59 | 17 | 0.17 | 59.5 |
| A | 3 | 2 | 63 | 16 | 0.18 | 57.1 |
| B | 4 | - | 65 | 18 | 0.67 | - |
| B | 5 | 1 | 62 | 20 | 0.39 | 41.8 |
| B | 6 | 2 | 61 | 18 | 0.46 | 31.3 |

Formaldehyde emission at 200°C was determined as described above. The reduction of formaldehyde emission depicted in Table 1 was each calculated based on the measured amount of formaldehyde generated at 200°C by the respective resin used in the absence of glycine. The formaldehyde emission of test compositions 2 and 3 were compared to the formaldehyde emission measured with test composition 1 (Resin A without glycine). The formaldehyde emission of test compositions 5 and 6 were compared to the formaldehyde emission measured with test composition 4 (Resin B without glycine).

As shown in table 1, the amino group containing compound does not significantly influence the physical properties and therefore the performance of the powder resin in the final product. This ensures an addition of the amino group containing compound without adaption of the resin recipe.

**Claims**

1. Solid resin composition, comprising
   at least one phenolic aldehyde resin obtainable by reacting at least one phenolic compound and at least one aldehyde under acidic conditions, and
   at least one amino group containing compound comprising at least one of a primary amine group and/or a secondary amine group.

2. Solid resin composition according to claim 1,
   wherein the at least one phenolic aldehyde resin is a thermoplastic phenolic aldehyde resin.

3. Solid resin composition according to any one of claims 1 to 2,
   wherein the at least one amino group containing compound is selected from the group consisting of alkyl amines preferably having 1 to 15 carbon atoms, alkanol amines preferably having 1 to 15 carbon atoms, amino carboxylic acids preferably having 2 to 15 carbon atoms, aromatic amines preferably having 5 to 15 carbon atoms, salts thereof, and mixtures thereof, preferably in an amount of at least 0.01 wt.-%, preferably in an amount in the range of from 0.01 wt.-% to 10 wt.-%, each based on the total weight of the solid resin composition.

**4.** Solid resin composition according to any one of claims 1 to 3,
wherein the at least one phenolic compound is selected from the group consisting of phenol, phenol alkyl ethers, hydroxy phenols, alkoxy phenols, alkyl phenols, phenyl phenols, hydroxy group containing polyphenylmethanes, hydroxynaphthalenes, and mixtures thereof.

**5.** Solid resin composition according to any one of claims 1 to 4,
wherein the at least one aldehyde compound is selected from the group consisting of aliphatic aldehydes preferably having 1 to 15 carbon atoms, aromatic aldehydes preferably having 7 to 15 carbon atoms and mixtures thereof.

**6.** Solid resin composition according to any one of claims 1 to 5,
wherein the at least one phenolic aldehyde resin is obtainable from reacting at least one phenolic compound and at least one aldehyde compound in a molar ratio of aldehyde compound to phenolic compound of less than 1 mol of aldehyde compound per 1 mol of phenolic compound, preferably in the range of from 0.3 to 0.99 mol of aldehyde compound per 1 mol of phenolic compound.

**7.** Solid resin composition according to any one of claims 1 to 6,
wherein the resin composition further comprises at least one aldehyde and/or aldehyde releasing agent, preferably in an amount of from 0 wt.-% to 50 wt.-%, each based on the total weight of the solid resin composition.

**8.** Solid resin composition according to any one of claims 1 to 7,
further comprising at least one additive, preferably in an amount in the range of from 0 wt.-% to 70 wt.-%, each based on the total weight of the solid resin composition.

**9.** Solid resin composition according to any one of claims 1 to 8,
wherein the solid resin composition is a particulate composition, which preferably is in the form of a free flowing powder, pellets, granules, beads, flakes or a combination thereof.

**10.** Method for producing a solid resin composition according to any one of claims 1 to 9, the method comprises the steps of:

a) obtaining at least one phenolic aldehyde resin by reacting at least one phenolic compound and at least one aldehyde compound under acidic conditions, and
b) adding at least one amino group containing compound comprising at least one of a primary amine group and/or a secondary amine group to the at least one phenolic aldehyde resin obtained in step a).

**11.** Solid curing composition for curing a phenolic aldehyde resin, comprising at least one aldehyde and/or aldehyde releasing agent, preferably in an amount of at least 0.01 wt.-%, based on the total weight of the solid curing composition , and at least one amino group containing compound comprising at least one of a primary amine group and/or a secondary amine group, preferably in an amount of at least 0.01 wt.-%, based on the total weight of the solid curing composition.

**12.** Solid curing composition according to claim 11,
wherein the at least one amino group containing compound is selected from the group consisting of alkyl amines preferably having 1 to 15 carbon atoms, alkanol amines preferably having 1 to 15 carbon atoms, amino carboxylic acids preferably having 2 to 15 carbon atoms, aromatic amines preferably having 5 to 15 carbon atoms, salts thereof, and mixtures thereof.

**13.** Solid curing composition according to any one of claims 11 to 12,
further comprising at least one additive, preferably in an amount up to 99,98 wt.-%, based on the total weight of the solid curing composition.

**14.** Solid curing composition according to any one of claims 11 to 13,
wherein the curing composition is a particulate curing composition, which preferably is in the form of a free flowing powder, pellets, granules, beads, flakes or a combination thereof.

**15.** Method for curing a phenolic aldehyde resin comprising the steps of:

a) providing at least one phenolic aldehyde resin, said resin being obtained from reacting at least one phenolic compound and at least one aldehyde under acidic conditions, and

b) applying heat to the at least one phenolic aldehyde resin obtained in step a) preferably at a temperature at or above the softening point of the at least one phenolic aldehyde resin, further preferably at a temperature of 50°C or more,

wherein between step a) and step b) and/or in step b) and/or after step b) said at least one phenolic aldehyde resin is contacted with at least one aldehyde and/or aldehyde releasing agent in the presence of at least one amino group containing compound comprising at least one of a primary amine group and/or a secondary amine group.

16. Method according to claims 15,
wherein the at least one phenolic aldehyde resin is provided in the form of a solid resin composition according to any one of claims 1 to 9.

17. Method according to any one of claims 15 or 16,
wherein the at least one aldehyde and/or aldehyde releasing agent and said at least one amino group containing compound comprising at least one of a primary amine group and/or a secondary amine group are provided in the form of a solid curing composition according to any one of claims 11 to 14.

18. Use of at least one amino group containing compound comprising at least one of a primary amine group and/or a secondary amine group in a method of curing a phenolic aldehyde resin with at least one aldehyde and/or aldehyde releasing agent, preferably formaldehyde releasing agent, wherein the phenolic aldehyde resin is obtained from reacting at least one phenolic compound and at least one aldehyde under acidic conditions.

19. Article comprising a thermosetting phenol formaldehyde plastic material obtained from curing a solid phenolic aldehyde resin, said resin being obtained from reacting at least one phenolic compound and at least one aldehyde under acidic conditions, with at least one aldehyde and/or aldehyde releasing agent, preferably formaldehyde and/or formaldehyde releasing agent, preferably selected from the group consisting of 1,3,5-trioxane, paraformaldehyde, hexamethylenetetramine, amino resins, solid resoles, bisoxazolines, benzoxazines, oxazolidines, epoxides, other solid aldehydes like glyceraldehyde, and mixtures thereof, preferably amino resins, 1,3,5-trioxane, paraformaldehyde, hexamethylenetetramine, and mixtures thereof, further preferably 1,3,5-trioxane, paraformaldehyde, hexamethylenetetramine, and mixtures thereof, further preferably hexamethylenetetramine, in the presence of at least one amino group containing compound comprising at least one of a primary amine group and/or a secondary amine group.

Europäisches
Patentamt

European
Patent Office

Office européen
des brevets

## EUROPEAN SEARCH REPORT

Application Number

EP 17 20 3026

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/297916 A1 (REDIGER RICHARD A [US]) 13 October 2016 (2016-10-13) * examples 1,7 * * page 10, paragraphs [0067], [0070] * | 1-19 | INV. C08L61/06 C08K5/17 C08G8/10 |
| X | Anonymous: "3-[(Benzyloxycarbonyl)amino]propionaldehyde (SDS)", , 31 August 2012 (2012-08-31), page 4, XP055470842, Retrieved from the Internet: URL:https://www.sigmaaldrich.com/MSDS/MSDS/PrintMSDSAction.do?name=msdspdf_180411604 2550225 [retrieved on 2018-04-26] * page 3, physical properties * | 11 | |
| X | JP H11 217416 A (SHOWA HIGHPOLYMER) 10 August 1999 (1999-08-10) * paragraph [0001] * * paragraph [0050] * | 15,18,19 | TECHNICAL FIELDS SEARCHED (IPC) |
| X | JP 2006 096891 A (SUMITOMO BAKELITE CO) 13 April 2006 (2006-04-13) * paragraph [0009] * * paragraph [0048] * | 15,18,19 | C08L C08K C08G |

The present search report has been drawn up for all claims

| Place of search | Date of completion of the search | Examiner |
|---|---|---|
| Munich | 26 April 2018 | Barrère, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

The Search Division considers that the present European patent application does not comply with the requirements of unity of invention and relates to several inventions or groups of inventions, namely:

1. claims: 1-10, 16

   Solid composition comprising a phenolic resin and an amino group containing compound
   ---

2. claims: 11-14, 17

   Solid curing composition comprising an aldehyde or aldehyde releasing agent and an amino containing compound
   ---

3. claims: 15, 18, 19

   Method of curing a phenolic resin using an amino containing compound and an aldehyde or an aldehyde releasing agent and article obtained therefrom
   ---

## ANNEX TO THE EUROPEAN SEARCH REPORT
## ON EUROPEAN PATENT APPLICATION NO.

EP 17 20 3026

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2018

| Patent document cited in search report | | Publication date | Patent family member(s) | | Publication date |
|---|---|---|---|---|---|
| US 2016297916 | A1 | 13-10-2016 | CA<br>US<br>WO | 2984600 A1<br>2016297916 A1<br>2016164864 A1 | 13-10-2016<br>13-10-2016<br>13-10-2016 |
| JP H11217416 | A | 10-08-1999 | NONE | | |
| JP 2006096891 | A | 13-04-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2621973 A1
- WO 2012025699 A1
- WO 2013160449 A1
- WO 2008005635 A2

- US 5696201 A
- US 7763316 B2
- US 7763316 A1

**Non-patent literature cited in the description**

- Petroleum products - Lubricating grease - Determination of dropping point (ISO 2176:1995). *DIN ISO,* May 1997, vol. 2176
- Plastics - Phenolic resins - Determination of residual phenol content by gas chromatography (ISO 8974:2002. *DIN EN ISO 8974:2002-09,* September 2002

- Plastics - Phenolic resins - Determination of reactivity on a B-transformation test plate (ISO 8987:2005). *DIN EN ISO 8987:2005-12,* December 2005
- Plastics - Phenolic resin powder - Determination of flow distance on a heated glass plate (ISO 8619:2003). *DIN EN ISO 8619:2005-03,* March 2005